# EUROPEAN PATENT SPECIFICATION

(11) **EP 0 590 160 B1**
(45) Date of publication and mention of the grant of the patent: **08.04.1998**
(21) Application number: 93908118.8
(22) Date of filing: 20.04.1993
(51) Int. Cl.: B29C 49/04, B29C 49/78, B29B 11/10, B29B 11/14, B29C 47/22

(54) **FLAT BLOW MOLDING APPARATUS, FLAT BLOW MOLDING METHOD AND PRODUCT OF FLAT BLOW MOLDING**
FLACHBLASFORMMASCHINE, FLACHBLASFORMVERFAHREN UND PRODUKTE DURCH FLACHBLASFORMEN
MACHINE D'EXTRUSION-SOUFFLAGE PLAT, PROCEDE D'EXTRUSION-SOUFFLAGE PLAT ET PRODUIT D'EXTRUSION-SOUFFLAGE PLAT

(30) Priority: 20.04.1992 JP 99708/92; 14.05.1992 JP 122111/92; 20.05.1992 JP 127459/92; 26.05.1992 JP 133624/92; 22.06.1992 JP 162996/92; 02.07.1992 JP 175492/92
(43) Date of publication of application: 06.04.1994
(73) Proprietor: Ishikawajima-Harima Heavy Industries Co., Ltd., Tokyo 100 (JP)
(72) Inventor: IWAWAKI, Akira, Yokohama-shi, Kanagawa 245 (JP); ARAKI, Satoshi, Yokohama-shi, Kanagawa 230 (JP); SHITARA, Yoshiharu, Yokohama-shi, Kanagawa 233 (JP); UMEZAWA, Yoshinori, Ebina-shi, Kanagawa 243-04 (JP); SHIMIZU, Takashi, Hiratsuka-shi, Kanagawa 254 (JP)
(74) Representative: Schaumburg, Thoenes, Thurn Patentanwälte
(86) International application number: JP9300509
(87) International publication number: WO9320997

(56) References cited:
- JP-A- 2 206 527
- JP-A- 2 292 017
- JP-A-62 148 214
- JP-A-63 057 208
- JP-B-43 011 552
- JP-Y-49 036 387
- US-A- 3 929 951
- US-A- 4 113 411
- PATENT ABSTRACTS OF JAPAN vol. 12, no. 325 (M-737) (3172) 5 September 1988 & JP-A-63 092 416 (ISHIKAWAJIMA HARIMA HEAVY IND. CO. LTD.)
- PATENT ABSTRACTS OF JAPAN vol. 15, no. 350 (M-1154) 5 September 1991 & JP-A-03 136 827 (UBE IND. LTD.) 11 June 1991

## Description

The present invention relates to a flat blow molding machine according to the generic part of the independent claim.

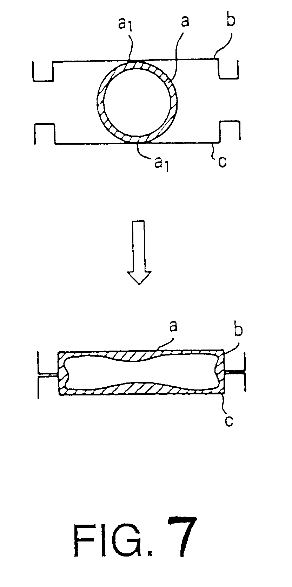

In recent years, thin and hollow flattened products such as heat collecting plates of a solar water-heating device, casings of office automation equipments, panels, furnitures and interior decorations are experimentally blow molded. In such cases, as shown in Figure 7 of the accompanying drawings, a cylindrical parison "a" is extruded downward, sandwiched by thin metallic molds "b" and "c" from left and right, and air is blown in, as a common blow molding machine does. As a result, the parison "a" expanded due to air injection is fixed at its part "a1" which first contacts the inner wall of the metallic mold and expands therefrom to left and right so that a product having a uniform thickness (wall thickness) cannot be obtained. Thereupon, the present applicant previously developed a flat blow molding machine which does not extrude the cylindrical parison "a", but extrudes a hollow flattened parison, that matches an inner wall of thin metallic molds "b" and "c", from the clearance between a planar flattened core and a flattened die surrounding the core so as to mold a hollow plate-like product having a uniform thickness.

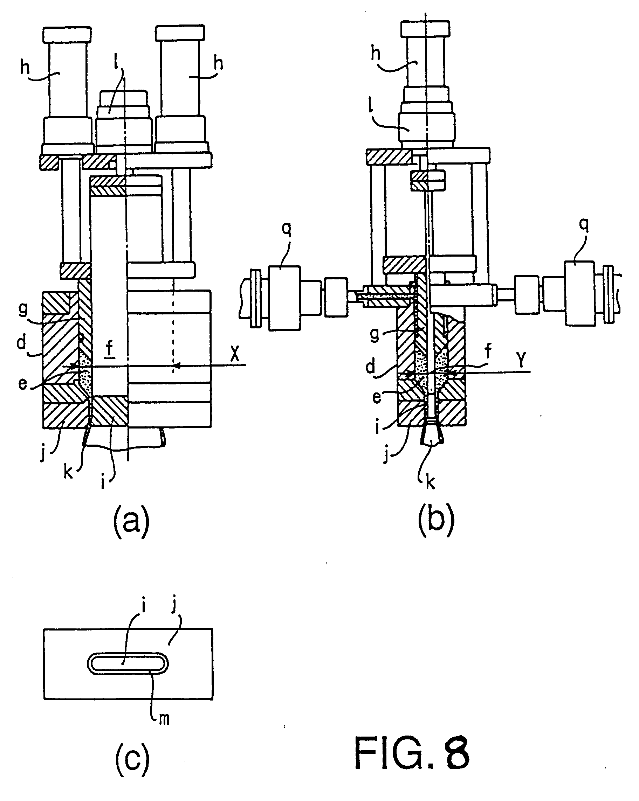

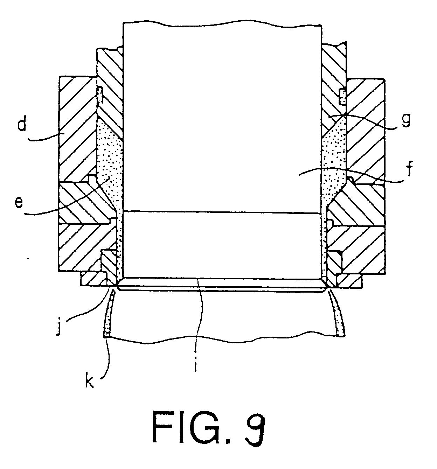

This type of flat blow molding machine is constructed as shown in Figure 8: an accumulator chamber "e" whose section is flattened is formed in a housing "d" in a vertical direction, a planar flattened mandrel "f" is vertically provided at the center of the accumulator chamber "e" and a flattened piston "g" is fitted over the flattened mandrel "f". The flattened piston "g" is lowered by a hydraulic cylinder "h" to pressurize a resin in the accumulator chamber "e" and the pressurized resin is extruded in the form of a hollow flattened parison "k" from the clearance between a flattened core "i" provided at the tip of the flattened mandrel "f" and a flattened die "j" provided at the lower end of the housing "d". The resin is fed to the accumulator chamber "e" from extruders "q" provided on the left and right sides in its thickness Y direction. The flattened parison "k" extruded as shown in Figure 9 is sandwiched by flattened metallic molds (not shown) in a direction perpendicular to the drawing sheet, and air is blown in.

However, conventional flat blow molding machines include the following problem:

Since the width of the extruded parison "k" cannot be adjusted, an unnecessary portion of the extruded flattened parison "k" can be collapsed by the metallic mold and the molded products inevitably have flashes when flattened products having a width smaller than the width of the parison "k" should be manufactured. In other words, a flash ratio increases and this is not economic.

The problem to be solved by the present invention is to provide a flat blow molding machine which can change the width of a flattened parison injected from the molding machine.

To solve this problem, the invention provides a flat blow molding machine which injects hollow flattened parison from the clearance between a flattened core and a flattened die surrounding the core, comprising the features stated in the independent claim. Dependent claim 3 describes a method of changing the shape of an extrusion gap of a machine according to the invention.

According to this construction, if the ends of the die are slid in the width direction respectively and the core is appropriately replaced upon the expansion/contraction of the die in the width direction, it is possible to change the width of the hollow flattened parison to be injected from the clearance between the core and the die. Further, if the flattened core includes a replaceable planar part and non-replaceable curved parts and only the replacable part is loaded and unloaded, the cost is reduced, since it will be sufficient to prepare a plurality of replaceable planar parts of different lengths which are less costly to manufacture.

Therefore, it is possible to change the width of the hollow flattened parison injected from the clearance between the flattened core and the flattened die.
Figure 1 is a set of illustrations useful to explain the major part of a flat blow molding machine according to one embodiment of the invention, in which Figure 1(a) is a front section, Figure 1(b) is a lateral section and Figure 1(c) is a bottom view;
Figure 2 is a partially cut front view of the flat blow molding machine shown in Figure 1;
Figure 3 is a partially cut lateral view of the flat blow molding machine shown in Figure 1;
Figure 4 is an illustration showing how a flattened core is mounted on a tip of a mandrel;
Figure 5 shows a modification of an actuator for sliding a slide piece of a flattened core;
Figure 6 shows a modification of the ends of the flattened core and a flattened die;
Figure 7 is a view useful to explain a conventional flat blow molding machine;
Figure 8 is a set of views showing a flat blow molding machine which was previously developed, in which (a) is a front view, (b) is a lateral view and (c) is a bottom view; and
Figure 9 is a partially enlarged view of Figure 34(a).

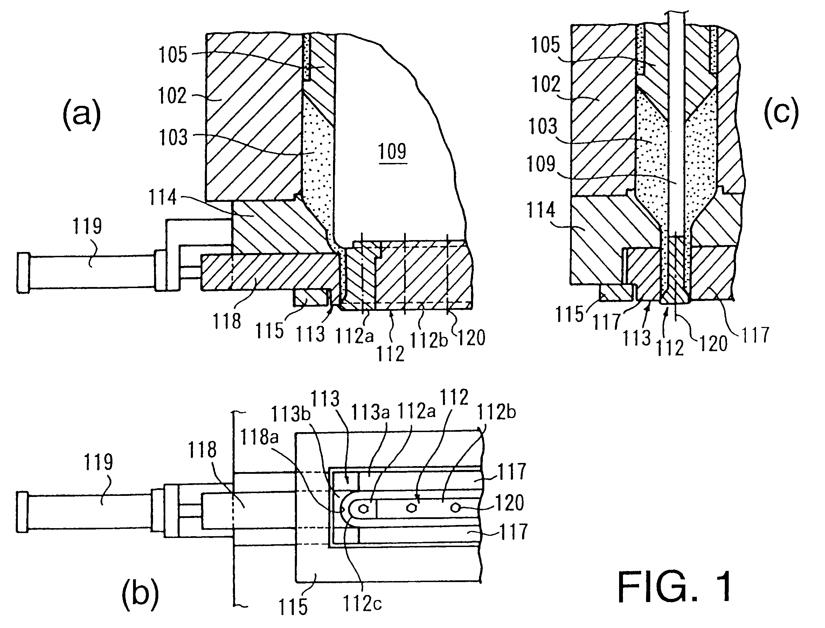

Now, an embodiment of the invention will be explained with reference to Figures 1-6.

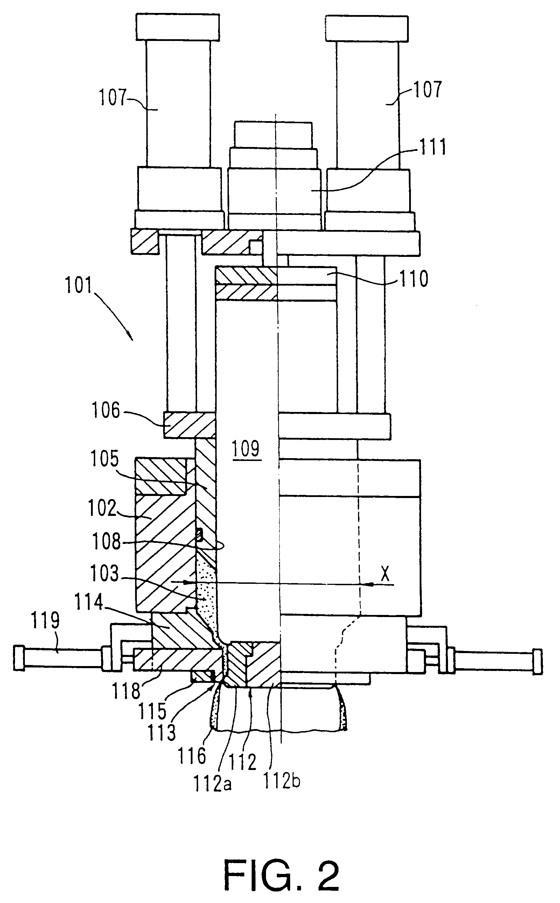

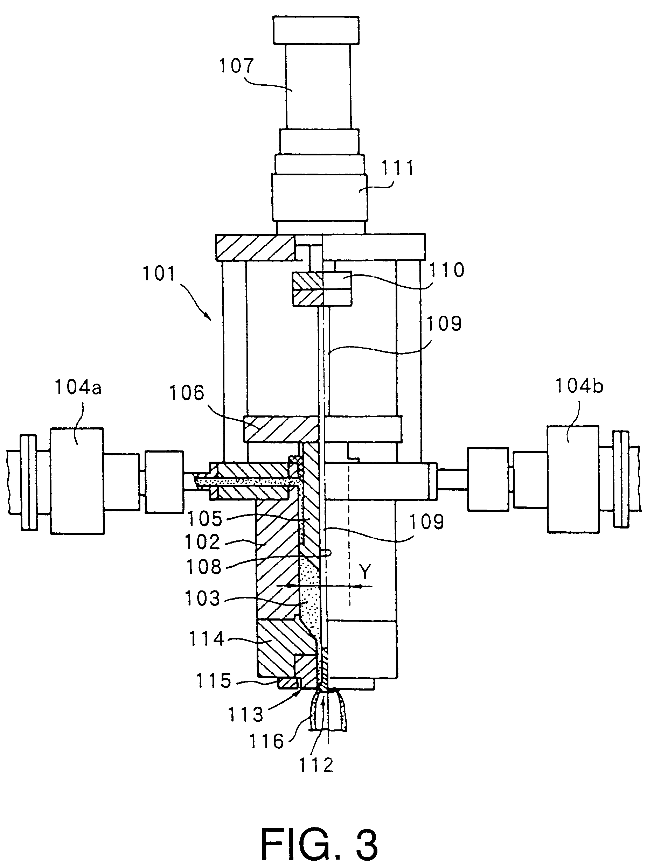

Figure 2 illustrates a front view of a flat blow molding machine 101 and Figure 3 illustrates its lateral view. As shown, a flattened accumulator chamber 103 having a width X and a thickness Y is formed in a flattened main body 102. Into the accumulator chamber 103 a plasticized resin is supplied from two extruders 104a and 104b located left and right in the width Y direction. It should be noted that only one extruder 104a/104b may be provided together with a distribution value (not shown) and the resin may be supplied into the accumulator chamber 103 through the distribution valve.

In the accumulator chamber 103 a flattened piston 105 is slidable in up and down directions. The flattened piston 105 is connected to a hydraulic cylinder 107 located above the main body 102 via an intermediate member 106. According to this construction, if the hydraulic cylinder 107 expands/contracts, the flattened piston 105 slides up and down in the accumulator chamber 103 to press the resin.

A flattened opening 108 extends vertically in the flat piston 105, and a planar mandrel 109 is inserted in the opening 108. The upper end of the mandrel 109 is connected to an actuator 111 (cylinder mechanism) above the main body 102 via an intermediate member 110, and a flattened core 112 is mounted on the lower end of the mandrel 109. A flattened die 113 surrounds the core 112 at a prescribed clearance. The die 113 is mounted on the lower end of the main body 102 by means of a plate 115 and a holder 114.

According to this construction, if the flat piston 105 compresses the resin in the accumulator chamber 103, the pressed resin is extruded from the clearance between the flat die 113 and the flat core 112 as a flattened parison 116. During this operation, if the actuator 111 is manipulated to move the core 112 up and down so as to adjust the clearance (gap) between the die 113 and the core 112, it is possible to control the thickness (wall thickness) of the extruded flat parison 116 in the extruding direction.

Next, the subject matters of this embodiment, i.e., the flattened die 113 and the flattened core 112, will be explained in detail with reference to Figure 1. In Figure 1, (a) is a front section of the flattened die 113 and the flattened core 112, (b) is a lateral section and (c) is a bottom view.

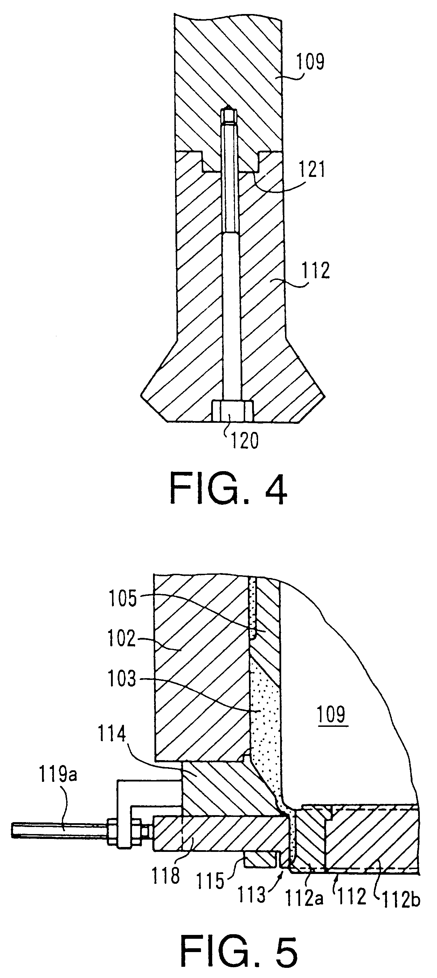

As shown in Figure 1(c), the flattened die 113 includes a straight portion 113a at the center and corner portions 113b at the ends. The straight portion 113a is constructed by two planar blocks 117 extending parallel to each other at a prescribed clearance. The corner portion 113b includes a slide piece 118 slidably sandwiched by these planar blocks 117. The slide piece 118 has a U-shaped curved (three dimensional) portion 118a and is slid in a width direction by an actuator 119 (hydraulic cylinder) supported by the die holder 114. In this embodiment, a hydraulic cylinder is employed as the actuator 119. However, it is not limited to this. For example, it may be a stepping motor or a feed screw mechanism 119a as illustrated in Figure 5. In any event, the slide piece 118 is moved by the actuator 119 in the width direction and fixed at a desired position.

On the other hand, the core 112 is constructed by a planar replaceable (or interchangeable) portion 112b located at the center and curved non-replaceable portions 112a located at the ends, as shown in Figures 1(a) and (c). The replaceable portion 112a is a planar member having the same thickness as the planar mandrel 109. The non-replaceable portion 112a is a member having a projection-like curved portion 112c which engages a recess-like curved portion 118a of the slide piece 118. The replaceable portion 112b and the non-replaceable portions 112a are respectively mounted on the lower end of the planar mandrel 109 by bolts 120. This is illustrated in Figure 4. As depicted, a connection 121 for the lower end of the flattened mandrel 109 and an upper end of the core 112 (replaceable portion 112b and non-replaceable portions 112a) is a faucet joint so that accurate positioning of these two elements is ensured. It should be noted that a hexagon socket head cap screw may be employed instead of a common hexagon head bolt 120.

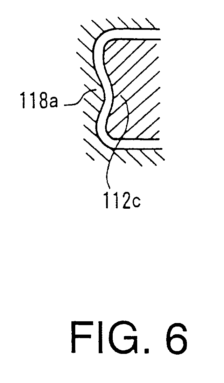

In this embodiment, the recess-like curved (three dimensional) portion 118a and the projection-like curved portion 112c are formed on the slide piece 118 of the flattened die 113 and on the non-replaceable portion 112a of the flattened core 112, respectively. However, in case the parison 116 expands a little upon injection of air during the blow molding, the slide piece 118a and the non-replaceable portion 112a may have a wavy curved portion at their centers, respectively, as shown in Figure 6. If this construction is employed, the concave center portion expands appropriately upon air injection so that the outer face of the parison 116 contacts the inner wall of a metallic mold substantially simultaneously. Thus, it is possible to make the thickness of the product uniform.

Now, the operation of the embodiment having the above construction will be described.

In the machine 101, the flattened parison 116 is extruded from the clearance between the flattened die 113 and the flattened core 112, as shown in Figures 2 and 3.

In order to reduce the width of the flattened parison 116, first the bolt 120 which mounts the flattened core 112 (replaceable portion 112b and non-replaceable portions 112a) onto the tip of the planar mandrel 109 is removed and the replaceable portion 112b and the non-replaceable portions 112a are removed from the mandrel 109. Then, one or both of left and right slide pieces of the flattened die 113 are slid by the actuator 119 such that they approach each other to reduce the width of the flattened die 113. After that, a new replaceable portion 112b which matches the reduced width of the flattened die 113 is mounted on the tip of the planar mandrel 109 by the bolt 120, and the previously removed non-replaceable portions 112a are again mounted on the ends of the mandrel by the bolt 120. To enlarge the width of the flattened parison 116 from this state, the above order of the procedures is reversed.

The above procedure enables a width change of the hollow flattened parison 116 extruded from the clearance between the flattened die 113 and the flattened core 112.

In this embodiment, since the core 112 includes the replaceable portion 112b at the center and the non-replaceable portions 112a at the ends and only the portion 112b is to be replaced, a plurality of inexpensive and straight (planar) replaceable portions 112b having different lengths will be required only. This reduces the cost.

If the actuator 111 is advanced/retracted upon signals from a gap setting device (not shown) during the injection of flattened parison 116 to move the flattened core 112 up and down appropriately via the mandrel 109, the clearance (gap) between the core 112 and the die 113 varies so that it is possible to adjust the thickness profile of the flattened parison 116 in the injection direction (longitudinal direction). Similarly, if the actuator 119 is advanced/retracted upon other signals from the gap setting device during the injection of the flatted parison 116 to move the slide piece 118 appropriately right and left, it is possible to adjust the thickness profile of the flattened parison 116 in the width direction.

## Claims

1. A flat blow molding machine (101) for extruding a hollow parison (116) having a flattened annular cross section from a parison extrusion gap formed at the bottom of the flat blow molding machine (101), the parison extruding gap being defined by flattened core (112) and a die (113) surrounding the core (112), the die (113) including slide pieces (118), characterized in that the core (112) includes a first curved end member (112a), a second curved end member and a central planar member (112b) positioned between the first and second end members (112a), in that the first and second end members (112a) and the planar member (112b) are detachably mounted on the lower end of a mandrel (109), in that the planar member (112b) is replaceable when the flattened shape of the core is elongated or shrunk in a longitudinal direction of the planar member and in that the slide pieces (118) of the die (113) are moved in accordance with a change of shape of the core (112) such that the parison thickness is maintained to be constant.

2. The flat blow molding machine (101) of claim 1, characterized in that the first and second end members (112a) and the planar member (112b) are mounted on the lower end of said mandrel (109) by bolts (120).

3. A method of changing the shape of a flattened parison extrusion gap of a flat blow molding machine (101) according to claim 1 or 2, the parison extrusion gap being defined by a flattened core (112) mounted on the bottom of the mandrel (109) and a die (113, 118) surrounding the core (112), comprising the steps of:
A) detachably mounting the first and second curved end members (112a) and the planar member (112b) on the lower end of the mandrel (109), respectively;
B) detaching the first and second curved end members (112a) and the planar member (112b) from the lower end of the mandrel (109), respectively, when the shape of the parison extrusion gap is to be changed;
C) replacing the planar member (112b) with another planar member (112b) having a different shape;
D) moving the die (118) in the longitudinal direction of the planar member (112b) in accordance with the shape of said another planar member (112b); and
E) attaching said another planar member (112b) and the first and second curved end members (112a) on the lower end of the mandrel (109), respectively, to form a different shape of said parison extrusion gap.

4. The method of claim 3, characterized in that the step A) is carried out by means of bolts (120).

## Patentansprüche

1. Flachblasformmaschine (101) zum Extrudieren eines hohlen Formlings (116) mit abgeflachtem Ringquerschnitt aus einem Formling-Extrusionsspalt am Unterteil der Flachblasformmaschine (101), der definiert ist durch einen abgeflachten Kern (112) und ein diesen umgebendes Werkzeug (113), wobei der Kern Schiebestücke (118) aufweist, dadurch **gekennzeichnet**, daß der Kern (112) ein erstes abgerundetes Endteil (112a), ein zweites abgerundetes Endteil und ein zentrales flaches Teil (112b) zwischen dem ersten und dem zweiten Endteil (112a) hat, daß das erste und das zweite Endteil (112a) und das flache Teil (112b) an dem unteren Ende eines Dorns (109) lösbar befestigt sind, daß das flache Teil (112b) auswechselbar ist, wenn die abgeflachte Form des Kerns in Längsrichtung des flachen Teils verlängert oder geschrumpft ist, und daß die Schiebestücke (118) des Werkzeugs (113) entsprechend einer Formänderung des Kerns (112) derart bewegt werden, daß die Dicke des Formlings konstant gehalten wird.

2. Flachblasformmaschine (101) nach Anspruch 1, dadurch **gekennzeichnet**, daß das erste und das zweite Endteil (112a) und das flache Teil (112b) am unteren Ende des Dorns (109) mit Bolzen (120) befestigt sind.

3. Verfahren zum Ändern der Form eines abgeflachten Formling-Extrusionsspalts einer Flachblasformmaschine (101) nach Anspruch 1 oder 2, bei der der Formling-Extrusionsspalt durch einen abgeflachten Kern (112) gebildet ist, der am unteren Ende des Dorns (109) befestigt ist und ein Werkzeug (113, 118) den Kern (112) umgibt, mit folgenden Schritten:
A) lösbares Befestigen des ersten und des zweiten abgerundeten Endteils (112a) und des flachen Teils (112b) jeweils am unteren Ende des Dorns (109);
B) Lösen des ersten und des zweiten abgerundeten Endteils (112a) und des flachen Teils (112b) jeweils vom unteren Ende des Dorns (109), wenn die Form des Formling-Extrusionsspalts zu ändern ist;
C) Ersetzen des flachen Teils (112b) durch ein anderes flaches Teil (112b) mit unterschiedlicher Form;
D) Bewegen des Werkzeugs (118) in Längsrichtung des flachen Teils (112b) entsprechend der Form des anderen flachen Teils (112b); und
E) Befestigen des anderen flachen Teils (112b) und des ersten und des zweiten abgerundeten Endteils (112a) jeweils am unteren Ende des Dorns (109) zum Bilden einer anderen Form des Formling-Extrusionsspalts.

4. Verfahren nach Anspruch 3, dadurch **gekennzeichnet**, daß der Schritt A) mittels Bolzen (120) ausgeführt wird.

## Revendications

1. Machine de moulage par extrusion-soufflage d'objets creux plats (101), destinée à extruder une paraison creuse (116) présentant une section transversale annulaire aplatie à partir d'un interstice d'extrusion de paraison formé en bas de la machine de moulage par extrusion-soufflage d'objets creux plats (101), l'interstice d'extrusion de paraison étant défini par un noyau aplati (112) et par une filière d'extrusion (113) entourant le noyau (112), ladite filière d'extrusion (113) comprenant des pièces coulissantes (118), caractérisée en ce que le noyau (112) comprend un premier élément d'extrémité incurvé (112a), un second élément d'extrémité incurvé et un élément central plan (112b) positionné entre les premier et second éléments d'extrémité (112a), en ce que les premier et second éléments d'extrémité (112a) et l'élément plan (112b) sont montés de façon amovible sur l'extrémité inférieure d'un mandrin (109), en ce que l'élément plan (112b) peut être remplacé lorsque l'on allonge ou raccourcit la forme aplatie du noyau dans la direction longitudinale de l'élément plan, et en ce que l'on déplace les pièces coulissantes (118) de la filière d'extrusion (113) en rapport avec la variation de forme du noyau (112) de façon que l'épaisseur de paroi de la paraison soit maintenue constante.

2. Machine de moulage par extrusion-soufflage d'objets creux plats (101) selon la revendication 1, caractérisée en ce que les premier et second éléments d'extrémité (112a) et l'élément plan (112b) sont montés sur l'extrémité inférieure dudit mandrin (109) à l'aide de boulons (120).

3. Procédé de modification de la forme d'un interstice d'extrusion de paraison aplatie d'une machine de moulage par extrusion-soufflage d'objets creux plats (101) selon la revendication 1 ou 2, l'interstice d'extrusion de paraison étant défini par un noyau aplati (112) monté sur le bas du mandrin (109) et par une filière d'extrusion (113, 118) entourant le noyau (112), ledit procédé comprenant les étapes consistant à :
A) monter de façon amovible les premier et second éléments d'extrémité incurvés (112a) et l'élément plan (112b) sur l'extrémité inférieure du mandrin (109), respectivement,
B) détacher les premier et second éléments d'extrémité incurvés (112a) et l'élément plan (112b) de l'extrémité inférieure du mandrin (109), respectivement, lorsque la forme de l'interstice d'extrusion de paraison doit être modifiée,
C) remplacer l'élément plan (112b) par un autre élément plan (112b) présentant une forme différente,
D) déplacer la filière d'extrusion (118) dans la direction longitudinale de l'élément plan (112b) conformément à la forme dudit autre élément plan (112b), et
E) fixer ledit autre élément plan (112b) et les premier et second éléments d'extrémité incurvés (112a) sur l'extrémité inférieure du mandrin (109), respectivement, afin de réaliser une forme différente dudit interstice d'extrusion de paraison.

4. Procédé selon la revendication 3, caractérisé en ce que l'étape A) est effectuée au moyen de boulons (120).
